# FASCICULE DE BREVET EUROPEEN

(11) **EP 3 074 298 B1**
(45) Date de publication et mention de la délivrance du brevet: **21.03.2018**
(21) Numéro de dépôt: 14798913.1
(22) Date de dépôt: 09.10.2014
(51) Int. Cl.: B62D 29/00, B62D 25/08, B62D 29/04

(54) **GUIDE D'AIR MONOPIÈCE POUR FACE AVANT DE VÉHICULE AUTOMOBILE ET VÉHICULE AINSI ÉQUIPÉ**
EINTEILIGE LUFTLEITUNG FÜR DEN FRONTBEREICH EINES KRAFTFAHRZEUGS UND DAMIT AUSGESTATTETES FAHRZEUG
ONE-PIECE AIR GUIDE FOR THE FRONT END OF A MOTOR VEHICLE AND VEHICLE PROVIDED WITH SAME

(30) Priorité: 19.11.2013 FR 1361331
(43) Date de publication de la demande: 05.10.2016
(60) Demande divisionnaire: 17202626.2
(73) Titulaire: Renault, 92100 Boulogne Billancourt (FR)
(72) Inventeur: HOLLEVILLE, Francis, F-78470 St Remy Les Chevreuse (FR); BERTHEVAS, Fabrice, F-91940 Gometz Le Chatel (FR); CZEPCZAK, Raphael, F-78720 Cernay La Ville (FR)
(86) Numéro de dépôt international: PCT/FR2014/052555
(87) Numéro de publication internationale: WO 2015/075336

(56) Documents cités:
- EP-B1- 1 957 346
- FR-A1- 2 911 558
- FR-A1- 2 965 226
- FR-A1- 2 967 375
- FR-A1- 2 981 887
- US-A1- 2002 014 322

## Description

L'invention concerne un guide d'air monopièce destiné à être intégré à l'avant du véhicule, notamment fixé à une face avant technique du véhicule. Un tel guide d'air a pour fonction de canaliser l'air pénétrant par au moins une ouverture ou grille d'aération dans la façade avant ou peau de bouclier avant du véhicule pour le conduire à un ensemble d'éléments regroupés dans ce qu'on appelle une « valise de refroidissement ». Par ce terme, on désigne l'ensemble des éléments nécessaires au refroidissement du moteur, parfois empilés en couches ou en partie superposés. La valise de refroidissement se compose classiquement du radiateur à eau de refroidissement moteur, éventuellement de l'échangeur air-air pour le refroidissement du turbo et du condenseur.

On appelle dans le métier « face avant technique » (FAT) une structure qui se trouve en avant du bloc moteur et qui a pour fonction de supporter différents organes, principalement le radiateur du bloc moteur. La FAT peut prendre de multiples formes. Dans certains cas, elle se réduit à une simple poutre transversale. Dans d'autres cas, elle constitue un châssis de forme plus ou moins complexe intégrant la valise de refroidissement. La FAT intègre en outre différentes fonctions telles que support de butées de capot, support de serrure de capot ou d'un jambage supportant la serrure de capot, etc.

Les guides d'air actuels sont généralement réalisés en plusieurs parties, comme décrit dans le document FR-A-2967375. Certains sont ainsi composés de plusieurs surfaces de guidage de l'air, généralement appelées convergents, disposées entre la façade avant et la FAT. Un taux de fuites d'air supérieur à 40% est toutefois observé avec ce type d'agencement, ce qui ne permet pas d'améliorer les performances du moteur par un refroidissement plus efficace.

D'autres guides d'air sont formés par assemblage de plusieurs modules de guidage d'air distincts pourvus de lèvres d'étanchéité entre la FAT et la façade avant du véhicule. Ces agencements présentent un taux de fuite plus faible, mais du fait du grand nombre de pièces à assembler, ils s'avèrent complexes à monter et présentent un poids élevé. Le coût de réalisation et de montage est ainsi élevé.

La masse de ces agencements a pu être réduite en remplaçant certaines parties par une partie structurelle rigide fixée à la FAT, les modules de guidage avec lèvres d'étanchéité assurant la liaison avec la façade avant. Cependant, alors que la partie avant du véhicule doit présenter une certaine compressibilité en cas du choc, la rigidité de la partie structurelle du guide d'air impacte sur l'architecture du véhicule et rend notamment difficile la réalisation de véhicule à faible porte à faux. En outre, le nombre de pièces à assembler reste important et l'architecture du véhicule reste contrainte.

Il existe donc un besoin pour un guide d'air qui soit simple à réaliser, économique tant à la fabrication qu'au montage, et qui présente un taux de fuite d'air faible. Il existe également un besoin pour un guide d'air impactant peu l'architecture du véhicule.

L'invention vise à pallier tout ou partie de ces inconvénients en proposant un guide d'air destiné à être intégré à l'avant d'un véhicule entre une face avant technique reliée à une traverse par des éléments compressibles longitudinalement et une façade avant dudit véhicule pourvue d'au moins une ouverture d'aération, le guide d'air présentant une face avant et une face arrière. Selon l'invention, le guide d'air est réalisé d'une unique pièce en matériau polymère et comprend :
- au moins un canal de guidage entre ses faces avant et arrière, destiné à conduire l'air depuis une ouverture d'aération de la façade avant jusqu'à la face avant technique,
- une zone de réception de la traverse présentant une concavité destinée à recevoir ladite traverse,
- une zone de fixation à la face avant technique du véhicule située sur sa face arrière,
- des moyens d'étanchéité solidaires de sa face avant et coopérant avec la façade avant, agencés de manière à assurer l'étanchéité entre ledit au moins un canal de guidage et la façade avant sur le pourtour de ladite ouverture d'aération de la façade avant.

Il est ainsi possible de réaliser de manière simple et économique un guide d'air, par exemple par moulage. Le guide d'air étant formé d'une unique pièce, les opérations de montage s'en trouvent réduites et l'étanchéité du guide d'air est améliorée. De plus, l'intégration de la traverse au guide d'air permet de réduire l'encombrement du guide d'air après montage tout en renforçant le guide d'air du fait de l'intégration de la traverse.

La zone de réception de la traverse peut avantageusement s'étendre sur toute la longueur du guide d'air en contact avec la traverse.

La concavité de la zone de réception de la traverse peut être située du côté de la face avant du guide d'air. Le guide d'air est alors entièrement placé entre la traverse et la FAT de sorte que l'encombrement longitudinal est faible, ce qui permet de réduire le porte à faux du véhicule. Cet agencement implique un montage du guide d'air sur le véhicule préalablement au montage de la traverse.

En variante, la concavité de la zone de réception de la traverse peut être située du côté de la face arrière du guide d'air. L'encastrement de la traverse permet également une réduction de l'encombrement longitudinal ainsi que du porte à faux du véhicule. Le guide d'air doit alors être monté sur le véhicule après montage de la traverse.

La zone de réception peut notamment se présenter sous la forme d'un logement dont la section est par exemple sensiblement en forme de U couché et/ou en forme de L. L'invention n'est toutefois pas limitée par la forme de la concavité de la zone de réception, laquelle peut être quelconque mais est avantageusement conformée pour permette un encastrement au moins partiel de la traverse dans le guide d'air.

Avantageusement et de manière non limitative, les moyens d'étanchéité peuvent être choisis parmi des joints d'étanchéité, par exemple en matériau polymère alvéolé, solidarisés à la face avant du guide. Cette solidarisation peut être réalisée par exemple par de l'adhésif double face. Des exemples de matériau qui peuvent être utilisés sont de la mousse polyéthylène ou de la mousse polyuréthane.

En variante ou en combinaison, les moyens d'étanchéité peuvent être choisis parmi des lèvres d'étanchéité en matériau polymère surmoulées ou chaussées sur un bord de la face avant du guide. Des exemples de matériau polymère qui peuvent être utilisés sont l'EPDM (Éthylène-propylène-diène monomère), les élastomères thermoplastiques (TPE), dont le SEBS (polystyrène-b-poly(éthylène-butylène)-b-polystyrène).

Avantageusement et de manière non limitative, la zone de fixation peut comprendre une pluralité de protubérances conformées pour être insérées dans des logements correspondants de la face avant technique. En particulier, cette configuration peut permettre d'obtenir une solidarisation étanche entre la FAT et le guide d'air, notamment lorsque les logements et protubérances sont de forme complémentaire, permettant éventuellement un emboîtement avec un ajustage serré.

Le guide d'air selon l'invention peut en outre présenter au moins l'une des particularités suivantes :
- sa face avant peut présenter une zone d'absorption de choc,
- une face inférieure peut s'étendre entre ses faces avant et arrière.

Une zone d'absorption de choc permet de remplacer les absorbeurs de choc habituellement disposés derrière la façade avant technique, ce qui permet de réduire encore le nombre de pièces, de faciliter le montage et donc de réduire le poids et le coût de l'ensemble.

Une face inférieure peut former un convergent pour diriger l'air en partie inférieure entre la façade avant et la FAT, permettant également de réduire le nombre de pièces.

Le matériau polymère utilisé pour réaliser le guide d'air selon l'invention peut être choisi parmi les matériaux polymères expansés, par exemple du polypropylène expansé ou du polystyrène expansé. De tels matériaux expansés présentent l'avantage d'être légers, ce qui permet de réaliser des guides d'air de faible poids, par exemple de poids de l'ordre de 1 kg ou moins.

Avantageusement, du polypropylène expansé est utilisé, ce qui confère au guide d'air une certaine souplesse et une compressibilité favorable lors des chocs à faible vitesse (inférieure à 15 km/h). Cette souplesse limite en effet les risques de détérioration du guide d'air et des éléments situés en arrière du guide d'air, tel que le radiateur supporté par la FAT par exemple, notamment pour les véhicules présentant un faible porte à faux. Le polypropylène expansé présente en outre l'avantage d'être recyclable et peut également être issu du recyclage. Ce matériau permet également de réduire les bruits et les jeux avec les autres pièces du véhicule. Enfin, l'outillage nécessaire pour réaliser un guide d'air selon l'invention est peu coûteux.

L'invention concerne également un véhicule automobile comportant :
- un compartiment moteur fermé par une façade avant dotée d'au moins une ouverture d'aération,
- une face avant technique supportant au moins un radiateur et
- une traverse reliée à la face avant technique par des éléments compressibles longitudinalement (appelés couramment « crash box »), ladite traverse étant située entre la face avant technique et la façade avant,
caractérisé en ce qu'il comprend un guide d'air selon l'invention dont la face arrière est solidarisée à la face avant technique et dont la face avant est au moins en partie en contact avec la façade avant, la traverse étant logée dans la zone de réception dudit guide d'air.

Un tel agencement permet :
- de limiter les fuites au niveau du guide d'air entre la façade avant et la FAT, ce qui permet d'améliorer la performance du moteur par une gestion plus efficace de son refroidissement,
- de réduire la consommation du véhicule grâce au poids réduit du guide d'air (une seule pièce utilisée, notamment de faible poids),
- une réduction du porte à faux du véhicule grâce à l'intégration de la traverse dans le guide d'air.

Avantageusement et de manière non limitative, des éléments d'étanchéité peuvent être disposés entre le guide d'air et des surfaces non planes d'éléments de structure du véhicule en contact avec le guide d'air, par exemple la traverse et les éléments compressibles longitudinalement. Cet agencement permet d'obtenir de manière simple une étanchéité latérale du guide d'air. Ces éléments d'étanchéité peuvent être en matériau polymère alvéolé, par exemple du type mentionné plus haut. Ils peuvent être simplement emboîtés sur les éléments de structure présentant une surface non plane.

Par exemple, deux éléments d'étanchéité de section sensiblement en forme de U peuvent être emboîtés chacun sur la traverse et un élément compressible adjacent, chaque élément d'étanchéité étant conformé pour fermer de manière étanche un espace entre d'une part ledit logement de réception et d'autre part des surfaces non planes de la traverse et d'un élément compressible. Ceci est particulièrement avantageux lorsque la zone de réception de la traverse est ouverte sur la face arrière du guide d'air, le guide d'air ne pouvant alors pas forcément être appliqué directement sur la FAT latéralement et devant alors être appliqué contre la traverse et ces éléments compressibles longitudinalement.

Avantageusement et de manière non limitative, le guide d'air est solidarisé à la face avant technique par emboîtement de protubérances de la face arrière du guide d'air dans des logements complémentaires correspondants de la face avant technique. Un tel emboîtement, notamment avec un ajustage serré, peut suffire pour assurer une étanchéité entre la FAT et le guide d'air. En outre, cet agencement permet un bon maintien du guide d'air par la FAT. Toutefois, optionnellement, des moyens de fixation supplémentaires de type vis ou pion traversant le guide d'air et fixés à la face avant technique peuvent être prévus.

Ces logements et protubérances peuvent s'étendre sur sensiblement toute la périphérie de la FAT et du guide d'air respectivement. Avantageusement, ces logements et protubérances s'étendent au moins suivant des bords supérieurs et inférieurs de la FAT et du guide d'air respectivement.

La FAT et le guide d'air peuvent avantageusement présenter des formes similaires, par exemple une forme sensiblement rectangulaire.

Le véhicule selon l'invention peut également présenter au moins un boitier pourvu de volets mobiles, notamment des volets mobiles commandés, logé à l'intérieur d'un canal de guidage dudit guide d'air, du côté de la face avant de ce dernier. Un tel boîtier peut être agencé pour améliorer le contrôle du flux d'air entrant dans un canal de guidage du guide d'air, en permettant de piloter le flux d'air entrant pour un meilleur compromis entre refroidissement et aérodynamisme.

En variante ou en combinaison, le véhicule peut comprendre une face inférieure dudit guide d'air qui relie de manière étanche la façade avant à la face avant technique, ou bien, le véhicule peut comprendre une paroi inférieure qui relie la façade avant à la face avant technique sous ledit guide d'air, ladite paroi inférieure étant solidarisée de manière étanche à la façade avant, à la face avant technique et au guide d'air. Cette paroi inférieure ou cette face inférieure forment un élément convergent qui favorise l'aérodynamisme du véhicule, notamment à grande vitesse.

En variante ou en combinaison, le guide d'air peut supporter des extrémités latérales de la façade avant, ce qui permet d'éviter une déformation de cette dernière et un meilleur rendu pour l'utilisateur en renforçant la façade avant latéralement.

En variante ou en combinaison, un absorbeur de choc peut être formé par une zone d'absorption de choc du guide d'air, permettant ainsi d'éviter de rajouter un absorbeur de choc spécifique et de simplifier la réalisation et le montage.

En variante ou en combinaison, le véhicule peut comprendre des moyens de fixation latéraux qui relient directement la façade avant et la face avant technique. De tels moyens de fixation sont envisageables grâce à l'encombrement longitudinal réduit du guide d'air.

D'autres caractéristiques et avantages de l'invention ressortiront de la description suivante de plusieurs exemples de réalisation. Il sera fait référence aux dessins annexés, non limitatifs, sur lesquels :
- la figure 1 est une vue en perspective d'un guide d'air selon un mode de réalisation de l'invention, monté sur une FAT d'un véhicule automobile, entre la FAT et la traverse du véhicule ;
- la figure 2 est une vue en perspective de la FAT et de la traverse de la figure 1 ;
- les figures 3a et 3b sont des vues en perspective de la face avant, respectivement de la face arrière du guide d'air de la figure 1 ;
- la figure 4 est une section longitudinale de la figure 1, au centre du véhicule, sur laquelle sont également représenté la façade avant du véhicule, son capot ainsi qu'une partie du groupe moto-ventilateur et le radiateur ;
- les figures 5a et 5b sont des sections représentant des exemples de moyens d'étanchéité entre un guide d'air selon l'invention et une façade avant de véhicule ;
- la figure 6 est une vue en perspective d'un guide d'air selon un autre mode de réalisation de l'invention ;
- la figure 7 est une section longitudinale au centre du véhicule de la partie basse du guide d'air représenté figure 6 ;
- la figure 8 est une section longitudinale latérale du guide d'air représenté figure 6 ;
- la figure 9 est une section longitudinale du guide d'air de la figure 8, au niveau d'un longeron du véhicule.

Dans la présente description, les termes avant, arrière, supérieur, inférieur, font référence aux directions avant et arrière du véhicule, lorsque le guide d'air est monté sur le véhicule. Les axes X, Y, Z, correspondent respectivement à l'axe longitudinal (d'avant en arrière), transversal et vertical du véhicule.

Par sensiblement horizontal, longitudinal ou vertical, on entend une direction/un plan formant un angle d'au plus ±20°, voire d'au plus ±10° avec une direction/un plan horizontal, longitudinal ou vertical.

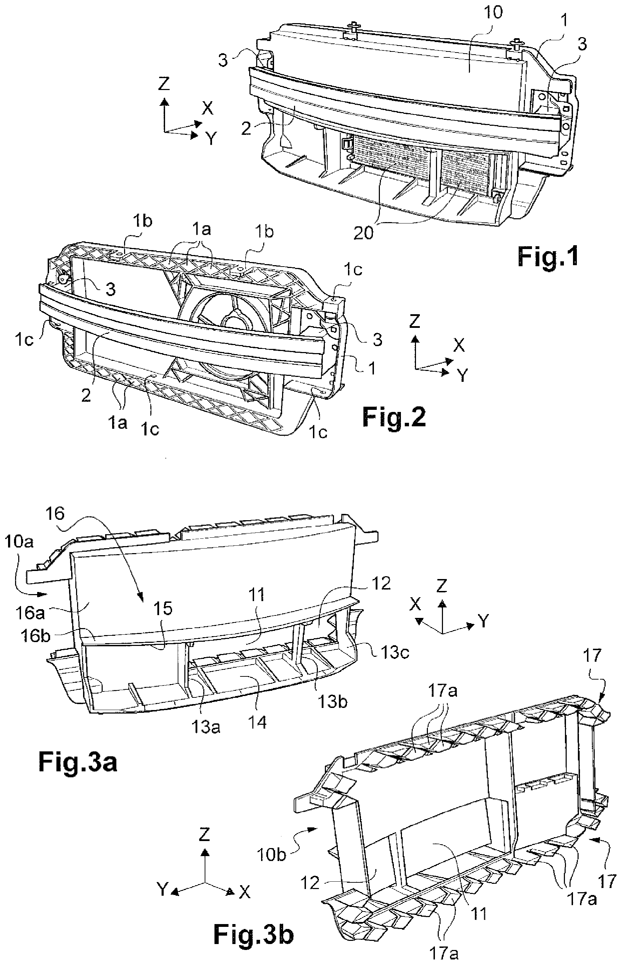

La figure 1 représente partiellement en perspective la partie avant d'un véhicule automobile sur la quelle sont visibles la FAT 1 du véhicule, la traverse extrême avant 2 et les éléments compressibles longitudinalement 3 (crash box) solidaires des extrémités de la traverse 2. Ces éléments compressibles 3 sont fixés sur la FAT 1 dans le prolongement des longerons (non représentés). Entre la FAT 1 et la traverse 2, un guide d'air 10 est disposé, ce dernier étant fixé à la FAT 1.

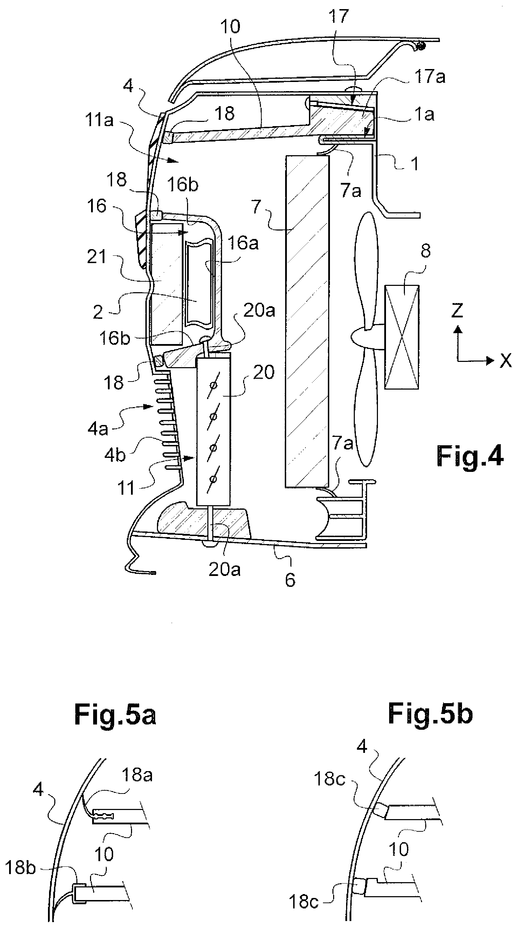

Tel que visible sur la section de la figure 4, devant le guide d'air 10 et la traverse 2, se trouve la façade avant 4 du véhicule, autrement dit la peau de bouclier. Au dessus du guide d'air 10, se trouve le capot avant 5 et en dessous du guide d'air 10, une plaque 6 formant un convergent.

Tel que visible sur la section de la figure 4, la FAT 1 supporte le radiateur 7 ainsi que le groupe moto-ventilateur 8 du véhicule. Des joints 7a sont disposés sur le pourtour du radiateur 7 pour assurer l'étanchéité entre le radiateur 7 et la FAT 1. Une ouverture d'aération 4a réalisée dans la façade avant 4 permet l'alimentation en air du radiateur 7, une grille 4b protégeant cette ouverture d'aération 4a.

La figure 2 représente plus en détail la FAT 1, la traverse 2 et les éléments compressibles 3. La FAT 1, de forme sensiblement rectangulaire, présente sur sa face dirigée vers l'avant du véhicule et destinée à recevoir en fixation le guide d'air 10, une pluralité de logements 1a le long de ses bords. On notera que ces logements 1a s'étendent sur toute la périphérie de la FAT 1 excepté dans les zones de fixation des éléments compressibles 3.

Le guide d'air 10 représenté sur la figure 1 présente une face avant 10a, face visible sur la figure 1 et représentée figure 3a, et une face arrière 10b, représentée figure 3b. Selon l'invention, le guide d'air 10 est réalisé d'une unique pièce en matériau polymère. Le matériau polymère est par exemple un polypropylène expansé, par exemple les produits ARPRO® ou P-block™ commercialisés par la société JSP.

Le guide d'air 10 présente une forme sensiblement rectangulaire et comprend deux canaux de guidage 11 et 12 dans l'exemple de la figure 1, ces canaux de guidage 11, 12 étant situés en partie inférieure du guide d'air 10, entre ses faces avant 10a et arrière 10b. Ces canaux de guidage 11, 12 sont destinés à conduire l'air depuis l'ouverture d'aération 4a de la façade avant jusqu'à la FAT 1 et plus précisément jusqu'au radiateur 7 supporté par la FAT 1. Le guide d'air 10 représenté comporte ainsi, saillant de sa face avant 10a, des parois sensiblement verticales 13a, 13b, 13c (figure 3a) délimitant latéralement les canaux de guidage 11, 12, et deux parois sensiblement horizontales inférieure 14 et supérieure 15. On notera que la paroi inférieure 14 s'étend de la face avant 10a à la face arrière 10b du guide d'air. Ces parois 13a-13c et 14, 15 sont destinées à venir en appui contre la façade avant 4 après montage du guide d'air 10 afin d'assurer l'étanchéité des canaux de guidage 11, 12 entre le guide d'air 10 et l'ouverture d'aération 4a.

Le guide d'air 10 présente en outre une zone de réception 16 de la traverse 2 formant un logement pour cette dernière. Tel que représenté sur les figures 1 à 4, la concavité de cette zone de réception 16 est située du côté de la face avant 10a du guide d'air. Les figures 1 et 3a d'une part et 4 d'autre part présentent deux modes de réalisation légèrement différents. Dans la représentation de la figure 3a, la zone de réception 16 présente une concavité de section sensiblement en forme de L délimitée par une paroi sensiblement verticale 16a de la face avant 10a et par une paroi sensiblement horizontale 16b de la face avant 10a, venant recevoir la traverse 2 tel que représenté sur la figure 1. Dans l'exemple représenté, cette paroi sensiblement horizontale 16b est confondue par la paroi supérieure 15 définissant les canaux de guidage 11, 12. La zone de réception 16 représentée figure 4 présente une concavité de section sensiblement en forme de U couché située sous un canal de guidage supérieur 11a (qui n'existe pas dans l'exemple des figures 1-3). La zone de réception 16 est ainsi délimitée par deux parois sensiblement horizontales 16b et une paroi sensiblement verticale 16a. Bien entendu, l'invention n'est pas limitée par la forme de la zone de réception 16, laquelle peut varier le long du guide d'air 10, notamment du fait de la forme généralement bombée à proximité du centre du véhicule.

La présence d'une zone de réception 16 permet ainsi un encastrement de la traverse 2 dans le guide d'air 10 sur toute la longueur de celui-ci (suivant la direction transversale du véhicule), réduisant ainsi l'encombrement longitudinal de l'ensemble guide d'air 10 et de la traverse 2.

Le guide d'air 10 présente également une zone de fixation 17 à la FAT 1 du véhicule. Cette zone de fixation 17, située sur sa face arrière 10b, comprend une pluralité de protubérances 17a conformées pour être insérées dans les logements 1a de la FAT 1 (figure 3b). En particulier, ces protubérances 17a sont de forme complémentaire des logements 1a de la FAT 1. De même que pour la FAT 1, ces protubérances 17a s'étendent sur sensiblement toute la périphérie du guide d'air 10, exceptées dans les zones latérales verticales du guide d'air 10. Lorsque le guide d'air 10 est monté sur la FAT 1, ses protubérances 17a sont emboîtées dans les logements 1a correspondants de la FAT 1, assurant l'étanchéité entre la FAT 1 et le guide d'air 10.

Cet emboîtement peut suffire à la fixation du guide d'air 10. En complément, tel que visible sur la figure 2, la FAT 1 peut présenter des pattes de fixation 1b et/ou des orifices de fixation 1c, pour la fixation au moyen de vis ou de pions du guide d'air 10 à la FAT 1.

Le guide d'air 10 comprend enfin des moyens d'étanchéité 18 solidaires de sa face avant 10a et coopérant avec la façade avant 4 du véhicule. Ces moyens d'étanchéité 18 sont agencés de manière à assurer l'étanchéité entre les canaux de guidage 11, 12 et l'ouverture d'aération 4a de la façade avant 4.

Ces moyens d'étanchéité 18 peuvent notamment être disposés le long des bords des parois délimitant les canaux de guidage 11, 12, par exemple le long des bords des parois 13a à 13c, 14 et 15.

Les moyens d'étanchéité 18 peuvent être des lèvres d'étanchéité 18a en matériau polymère surmoulées sur un bord d'une paroi de la face avant 10a du guide d'air 10, ou des lèvres d'étanchéité 18b en matériau polymère chaussées sur un bord d'une paroi de la face avant 10a du guide d'air 10.

Les moyens d'étanchéité 18 peuvent encore être des joints d'étanchéité 18c, par exemple en matériau polymère alvéolé, solidarisés à la face avant 10a du guide d'air 10, tel que représenté schématiquement sur la figure 5b.

Indifféremment l'un et/ou l'autre de ces moyens d'étanchéité 18a, 18b, 18c peuvent être utilisés.

Tel que visible sur la section de la figure 4, le guide d'air 10 présente, logé à l'intérieur de chacun de ses canaux de guidage 11, 12, un boitier 20 pourvu de volets mobiles (représenté également figure 1) permettant de contrôler le flux d'air entrant dans les canaux de guidage 11, 12. Ce boîtier 20 est fixé au guide d'air 10 par des vis ou pions 20a. Notamment, la vis de fixation inférieure 20a sert également à la fixation du guide d'air 10 à la plaque 6 formant convergent laquelle s'étend jusqu'à la FAT 1 en zone inférieure, assurant l'étanchéité du guide d'air 10 en partie inférieure, notamment dans les zones du guide d'air 10 dépourvues de protubérances 17a insérées dans la FAT 1.

Dans l'exemple représenté sur les figures 1 à 4, le guide d'air 10 est monté sur la FAT 1 avant le montage de la traverse 2, le radiateur 7 et le groupe moto-ventilateur 8 ayant été préalablement montés sur la FAT 1. Le boîtier 20 à volets mobiles est alors de préférence monté sur le guide d'air 10 avant la fixation de celui-ci sur la FAT 1, au moins au niveau de sa partie supérieure. La traverse 2, positionnée dans la zone de réception 16, est ensuite fixée aux éléments compressibles 3, puis la façade avant 4 est montée, éventuellement après la mise en place d'un absorbeur de choc 21 entre la traverse 2 et la façade avant 4. La plaque 6 formant convergent peut alors être fixée sous le guide d'air 10.

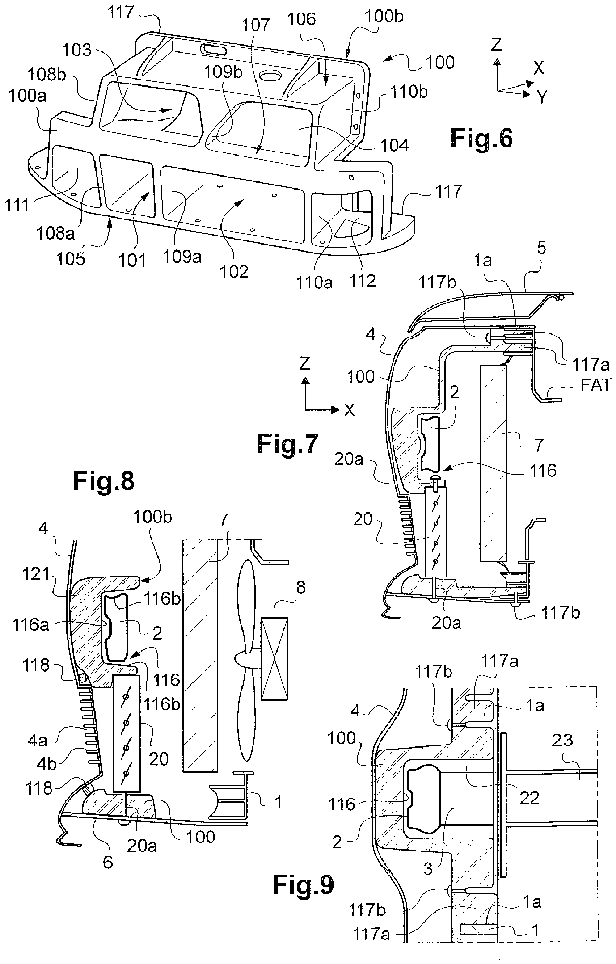

Les figures 6 à 9 représentent un autre mode de réalisation dans lequel la traverse 2 est encastrée sur la face arrière 100b d'un guide d'air 100. Sur les figures 6 à 9, les éléments de structure du véhicule (hors guide d'air 100) sont identiques à ceux décrits en référence aux figures 1 à 4 : les mêmes références sont donc utilisées.

Le guide d'air 100 représenté sur les figures 6 à 9 présente également une face avant 100a (visible sur la figure 6) et une face arrière 100b qui est fixée à la FAT 1 (voir sections 7 à 9). Le guide d'air 100 présente également une forme sensiblement rectangulaire et le même matériau que celui décrit pour le précédent mode de réalisation peut être utilisé.

Par rapport au guide d'air 10 décrit précédemment, le guide d'air 100 présente davantage de canaux de guidage. Sur la figure 6, on distingue deux canaux de guidage inférieurs 101, 102 et deux canaux de guidage supérieurs 103, 104. L'un des deux canaux de guidage inférieur 101 peut servir pour l'alimentation en air d'un Refroidisseur Air Suralimentation (RAS), l'autre canal de guidage 102 peut servir comme alimentation d'air inférieure pour le radiateur 7 et/ou pour un condenseur de climatisation. Les canaux de guidage supérieur 103, 104 peuvent être des alimentations d'air supérieures pour le radiateur 7.

Ces différents canaux de guidage 101-104 sont délimités par des parois sensiblement horizontales inférieure 105, supérieure 106 et médiane 107 et par des parois sensiblement verticales inférieures 108a, 109a, 110a et supérieures 108b, 109b, 110b. Il est possible de rajouter des parois de séparation des canaux de guidage 101-104 après montage du guide d'air 100, ces parois de séparation étant du même matériau que le guide d'air 100 (non représentées).

On distingue latéralement d'autres ouvertures 111, 112 en partie inférieure du guide d'air 100, qui permettent de créer des raidisseurs latéraux anti cloquage pour la peau de bouclier dans la continuité de de la paroi horizontale 107, laquelle peut former un absorbeur de choc. Un pied vertical renforce la fonction anti cloquage.

Le guide d'air 100 présente en outre une zone de réception 116 de la traverse 2 formant un logement pour cette dernière. Tel que représenté sur les figures 7 à 9, la concavité de cette zone de réception 116 est située du côté de la face arrière 100b du guide d'air 100. Sur ces figures 7 à 9, la zone de réception 116 présente une concavité de section sensiblement en forme de U couché délimitée par une paroi sensiblement verticale 116a de la face arrière 100b et par deux parois sensiblement horizontales 116b de la face arrière 100b.

De même que pour l'exemple précédemment décrit, la présence d'une zone de réception 116 permet un encastrement de la traverse 2 dans le guide d'air 100 sur toute la longueur de celui-ci (suivant la direction transversale du véhicule), mais du côté de sa face arrière 100b, réduisant ainsi l'encombrement longitudinal de l'ensemble guide d'air 100 et traverse 2.

Comme dans l'exemple décrit plus haut, le guide d'air 100 présente également une zone de fixation 117 à la FAT 1 du véhicule. Cette zone de fixation 117, située sur sa face arrière 100b, comprend une pluralité de protubérances 117a conformées pour être insérées dans les logements 1a de la FAT 1 (figures 7 et 9). En particulier, ces protubérances 117a sont de forme complémentaire des logements 1a de la FAT 1. La disposition des protubérances 117a et des logements 1a peut être similaire à celle décrite en référence aux figures 1 à 4. En complément de l'emboîtement des protubérances 117a et des logements 1a, des vis ou pions de fixation 117b sont fixés sur la FAT 1 au travers d'orifices correspondants du guide d'air 100 et de la FAT 1 (figures 8, 9).

Le guide d'air 100 comprend enfin des moyens d'étanchéité 118 solidaires de sa face avant 100a et coopérant avec la façade avant 4 du véhicule (figure 7). Ces moyens d'étanchéité 118 sont agencés de manière à assurer l'étanchéité entre les canaux de guidage 101-104 et l'ouverture d'aération 4a de la façade avant 4. Ils peuvent notamment être disposés le long des bords des parois délimitant les canaux de guidage 101-104, par exemple le long des bords des parois 108a-b, 19a-b, 110a-b, 105, 106, 107. Les mêmes moyens d'étanchéité que ceux décrits en référence aux figures 5a et 5b peuvent être utilisés.

Comme dans le précédent mode de réalisation, tel que visible sur les sections des figures 7 et 8, le guide d'air 100 présente, logé à l'intérieur de chacun des canaux de guidage inférieurs 101, 102, un boitier 20 pourvu de volets mobiles permettant de contrôler le flux d'air entrant dans les canaux de guidage 101, 102. Ce boîtier 20 est fixé au guide d'air 100 par des vis ou pions 20a. Notamment, la vis de fixation inférieure 20a sert également à la fixation du guide d'air 100 à la plaque 6 formant convergent laquelle s'étend jusqu'à la FAT 1 en zone inférieure, assurant l'étanchéité du guide d'air 100 en partie inférieure, notamment dans les zones du guide d'air 100 dépourvues de protubérances 117a insérées dans la FAT 1.

Dans l'exemple représenté sur les figures 6 à 9, le guide d'air 100 est monté sur la FAT 1 après le montage de la traverse 2 les éléments compressibles 3 eux-mêmes solidaires de la FAT 1 en regard des longerons 23. Le radiateur 7 et le groupe moto-ventilateur 8 ont été préalablement montés sur la FAT 1. Le boîtier 20 à volets mobiles est de préférence monté sur le guide d'air 100 avant la fixation de celui-ci sur la FAT 1, au moins au niveau de sa partie supérieure. Préalablement au montage du guide d'air 100 sur la FAT 1, des éléments d'étanchéité 22 sont disposés entre le guide d'air 100 et des surfaces non planes d'éléments de structure du véhicule en contact avec le guide d'air 100. Dans l'exemple, ces éléments d'étanchéité 22 sont disposés sur la traverse 2 et les éléments compressibles longitudinalement 3. Ces éléments d'étanchéité 22 peuvent présenter une section sensiblement en forme de U et être conformés pour combler un espace libre pouvant exister d'une part entre la traverse 2 et la zone de réception 116 et d'autre part entre un élément incompressible 3 et la zone de réception 116. L'un de ces éléments d'étanchéité 22 est représenté sur la figure 9. Il peut notamment être réalisé en mousse alvéolaire étanche. Ceci permet d'assurer une étanchéité latéralement, alors que, le guide d'air 100 étant disposé « par-dessus » la traverse 2 reliée à la FAT 1 par les éléments incompressibles 3, il n'existe pas toujours suffisamment de place le long de la FAT 1 pour la fixation du guide d'air directement sur la FAT 1. Après fixation du guide d'air 100, la façade avant 4 peut être montée. Dans ce mode de réalisation, le guide d'air 100 peut intégrer, à hauteur de la traverse 2 et en regard de la façade avant 4, un absorbeur de choc 121 (figure 7) constitué par une zone centrale de la paroi médiane 107 et/ou placé au-devant de celle-ci. La plaque 6 formant convergent peut alors être fixée sous le guide d'air 100. On notera en outre que ce guide d'air 100 peut être conformé pour supporter des extrémités latérales de la façade avant 4. Comme évoqué ci-dessus, la partie centrale de la paroi médiane 107 joue le rôle de poutre ou traverse structurelle destinée à absorber les chocs (on évoque ici la partie avant de la paroi médiane 107). Cette paroi médiane 107 est prolongée latéralement au-delà des parois verticales 108b et 110b par des zones anti-cloquage ayant la forme de jambes prenant appui sur la paroi horizontale inférieure 105 (figure 6). Ces jambes sont en équerre ou en arc s'étendant de part et d'autre de la paroi médiane 107. Les ouvertures latérales 111, 112 sont précisément délimitées par ces jambes, la paroi inférieure 105 et les parois verticales inférieures 108a, 110a. On note que la paroi verticale supérieure 108b est sensiblement à l'aplomb vertical de la paroi verticale inférieure 108a tandis que la paroi verticale supérieure 110b est sensiblement à l'aplomb vertical de la paroi verticale inférieure 110a.

L'invention n'est pas limitée par les modes de réalisation décrits lesquels peuvent être combinés. Notamment, le nombre et la position des canaux de guidage peuvent varier en fonction des organes nécessitant une alimentation en air. La forme générale du guide d'air pourra en outre varier d'un véhicule à un autre en fonction de la forme de la façade avant, de la FAT, de l'encombrement du compartiment moteur.

## Revendications

1. Guide d'air (10, 100) destiné à être intégré à l'avant d'un véhicule entre une face avant technique (1) reliée à une traverse (2) par des éléments compressibles longitudinalement (3) et une façade avant (4) dudit véhicule pourvue d'au moins une ouverture d'aération (4a), le guide d'air (10, 100) présentant une face avant (10a, 100a) et une face arrière (10b, 100b), **caractérisé en ce que** le guide d'air (10, 100) est réalisé d'une unique pièce en matériau polymère et **en ce qu'**il comprend :
- au moins un canal de guidage (11, 12, 101-104) entre ses faces avant et arrière, destiné à conduire l'air depuis une ouverture d'aération (4a) de la façade avant (4) jusqu'à la face avant technique (1),
- une zone de réception (16, 116) de la traverse (2) présentant une concavité destinée à recevoir ladite traverse,
- une zone de fixation (17, 117) à la face avant technique (1) du véhicule située sur sa face arrière (10b, 100b),
- des moyens d'étanchéité (18, 118) solidaires de sa face avant (10a, 100a) et coopérant avec la façade avant (4), agencés de manière à assurer l'étanchéité entre ledit au moins un canal de guidage (11, 12, 101-104) et la façade avant (4) sur le pourtour de ladite ouverture d'aération (4a) de la façade avant.

2. Guide d'air (10, 100) selon la revendication 1, **caractérisé en ce que** la concavité de la zone de réception (16, 116) de la traverse est située du côté de la face avant (10a) du guide d'air (10) ou du côté de la face arrière (100b) du guide d'air (100).

3. Guide d'air (10, 100) selon l'une des revendications 1 ou 2, **caractérisé en ce que** les moyens d'étanchéité (18, 118) sont choisis parmi :
- des lèvres d'étanchéité (18a, 18b) en matériau polymère surmoulées ou chaussées sur un bord de la face avant du guide
- des joints d'étanchéité (18c), par exemple en matériau polymère alvéolé, solidarisés à la face avant du guide.

4. Guide d'air (10, 100) selon l'une des revendications 1 à 3, **caractérisé en ce que** la zone de fixation (17, 117) comprend une pluralité de protubérances (17a, 117a) conformées pour être insérées dans des logements (1a) correspondants de la face avant technique (1).

5. Guide d'air (10, 100) selon l'une des revendications 1 à 4, caractérisé en qu'il présente au moins l'une des particularités suivantes :
- sa face avant (100a) présente une zone d'absorption de choc (121),
- une face inférieure (14) s'étend entre ses faces avant et arrière.

6. Guide d'air (10, 100) selon l'une des revendications 1 à 5, caractérisé en que le matériau polymère du guide d'air est choisi parmi les matériaux polymères expansés, par exemple le polypropylène expansé ou le polystyrène expansé.

7. Véhicule comportant :
- un compartiment moteur fermé par une façade avant (4) dotée d'au moins une ouverture d'aération (4a),
- une face avant technique (1) supportant au moins un radiateur (7) et
- une traverse (2) reliée à la face avant technique (1) par des éléments compressibles longitudinalement (3), ladite traverse (2) étant située entre la face avant technique (1) et la façade avant (4), **caractérisé en ce qu'**il comprend un guide d'air (10, 100) selon l'une des revendications précédentes dont la face arrière (10b, 100b) est solidarisée à la face avant technique (1) et dont la face avant (10a, 100a) est au moins en partie en contact avec la façade avant (4), la traverse (2) étant logée dans la zone de réception (16, 116) dudit guide d'air (10, 100).

8. Véhicule selon la revendication 7, **caractérisé en ce que** des éléments d'étanchéité (22) sont disposés entre le guide d'air (100) et des surfaces non planes d'éléments de structure du véhicule en contact avec le guide d'air, par exemple des surfaces non planes de la traverse (2) et les éléments compressibles longitudinalement (3).

9. Véhicule selon la revendication 7 ou 8, **caractérisé en ce que** le guide d'air (10, 100) est solidarisé à la face avant technique (1) par emboîtement de protubérances (17a, 117a) de la face arrière (10b, 100b) du guide d'air (10, 100) dans des logements (1a) complémentaires correspondants de la face avant technique (1), et optionnellement par des moyens de fixation supplémentaires de type vis ou pion traversant le guide d'air et fixés à la face avant technique.

10. Véhicule selon l'une des revendications 7 à 9, **caractérisé en ce qu'**il comprend au moins l'une des caractéristiques suivantes :
- au moins un boitier (20) pourvu de volets mobiles est logé à l'intérieur d'un canal de guidage (11, 12, 101, 102) dudit guide d'air (10, 100), du côté de la face avant de ce dernier,
- une face inférieure (14, 105) dudit guide d'air (10, 100) relie de manière étanche la façade avant (4) à la face avant technique (1) ou une paroi inférieure (6) relie la façade avant (4) à la face avant technique (1) sous ledit guide d'air, ladite paroi inférieure (6) étant solidarisée de manière étanche à la façade avant, à la face avant technique et au guide d'air,
- le guide d'air (100) supporte des extrémités latérales de la façade avant (4),
- un absorbeur de choc est formé par une zone d'absorption de choc (121) du guide d'air (100),
- des moyens de fixation latéraux relient directement la façade avant et la face avant technique.

## Patentansprüche

1. Luftleiter (10, 100), dazu bestimmt, an der Vorderseite eines Fahrzeugs zwischen einer Frontendstruktur (1), die über längs komprimierbare Elemente (3) mit einem Querträger (2) verbunden ist, und einer Frontseite (4) des Fahrzeugs integriert zu werden, die mit mindestens einer Lüftungsöffnung (4a) versehen ist, wobei der Luftleiter (10, 100) eine Vorderseite (10a, 100a) und eine Rückseite (10b, 100b) aufweist, **dadurch gekennzeichnet, dass** der Luftleiter (10, 100) aus einem Stück aus Polymermaterial hergestellt ist und dass er enthält:
- mindestens einen Leitkanal (11, 12, 101-104) zwischen seiner Vorder- und Rückseite, dazu bestimmt, die Luft von einer Lüftungsöffnung (4a) der Frontseite (4) bis zur Frontendstruktur (1) zu leiten,
- einen Aufnahmebereich (16, 116) des Querträgers (2), der eine Konkavität aufweist, die dazu bestimmt ist, den Querträger aufzunehmen,
- einen Befestigungsbereich (17, 117) an der Frontendstruktur (1) des Fahrzeugs, der sich an seiner Rückseite (10b, 100b) befindet,
- Dichtungseinrichtungen (18, 118), die fest mit seiner Vorderseite (10a, 100a) verbunden sind und mit der Frontseite (4) zusammenwirken, so angeordnet, dass sie die Dichtheit zwischen dem mindestens einen Leitkanal (11, 12, 101-104) und der Frontseite (4) über den Umfang der Lüftungsöffnung (4a) der Frontseite zu gewährleisten.

2. Luftleiter (10, 100) nach Anspruch 1, **dadurch gekennzeichnet, dass** die Konkavität des Aufnahmebereichs (16, 116) des Querträgers sich auf der Seite der Vorderseite (10a) des Luftleiters (10) oder auf der Seite der Rückseite (100b) des Luftleiters (100) befindet.

3. Luftleiter (10, 100) nach einem der Ansprüche 1 oder 2, **dadurch gekennzeichnet, dass** die Dichtungseinrichtungen (18, 118) ausgewählt werden aus:
- Dichtlippen (18a, 18b) aus Polymermaterial, die auf einen Rand der Vorderseite des Leiters aufgeformt oder aufgezogen sind,
- Dichtungen (18c), zum Beispiel aus wabenförmigem Polymermaterial, die fest mit der Vorderseite des Leiters verbunden sind.

4. Luftleiter (10, 100) nach einem der Ansprüche 1 bis 3, **dadurch gekennzeichnet, dass** der Befestigungsbereich (17, 117) eine Vielzahl von Vorsprüngen (17a, 117a) enthält, die ausgebildet sind, um in entsprechende Aufnahmen (1a) der Frontendstruktur (1) eingeführt zu werden.

5. Luftleiter (10, 100) nach einem der Ansprüche 1 bis 4, **dadurch gekennzeichnet, dass** er mindestens eine der folgenden Besonderheiten aufweist:
- seine Vorderseite (100a) hat einen stoßabsorbierenden Bereich (121),
- eine Unterseite (14) erstreckt sich zwischen seiner Vorder- und Rückseite.

6. Luftleiter (10, 100) nach einem der Ansprüche 1 bis 5, **dadurch gekennzeichnet, dass** das Polymermaterial des Luftleiters aus den geschäumten Polymermaterialien ausgewählt wird, zum Beispiel geschäumtem Polypropylen oder geschäumtem Polystyrol.

7. Fahrzeug, das aufweist:
- einen von einer mit mindestens einer Lüftungsöffnung (4a) versehenen Frontseite (4) verschlossenen Motorraum,
- eine Frontendstruktur (1), die mindestens einen Kühler (7) trägt, und
- einen Querträger (2), der durch längs komprimierbare Elemente (3) mit der Frontendstruktur (1) verbunden ist, wobei der Querträger (2) sich zwischen der Frontendstruktur (1) und der Frontseite (4) befindet,
**dadurch gekennzeichnet, dass** es einen Luftleiter (10, 100) nach einem der vorhergehenden Ansprüche enthält, dessen Rückseite (10b, 100b) fest mit der Frontendstruktur (1) verbunden ist und dessen Vorderseite (10a, 100a) mindestens zum Teil mit der Frontseite (4) in Kontakt ist, wobei der Querträger (2) im Aufnahmebereich (16, 116) des Luftleiters (10, 100) untergebracht ist.

8. Fahrzeug nach Anspruch 7, **dadurch gekennzeichnet, dass** Dichtungselemente (22) zwischen dem Luftleiter (100) und nicht ebenen Flächen von Strukturelementen des Fahrzeugs in Kontakt mit dem Luftleiter angeordnet sind, zum Beispiel nicht ebenen Flächen des Querträgers (2) und den längs komprimierbaren Elementen (3).

9. Fahrzeug nach Anspruch 7 oder 8, **dadurch gekennzeichnet, dass** der Luftleiter (10, 100) durch Einfügen von Vorsprüngen (17a, 117a) der Rückseite (10b, 100b) des Luftleiters (10, 100) in entsprechende komplementäre Aufnahmen (1a) der Frontendstruktur (1), und optimal durch zusätzliche Befestigungseinrichtungen der Art Schraube oder Zapfen, fest mit der Frontendstruktur (1) verbunden ist, die den Luftleiter durchqueren und an der Frontendstruktur befestigt sind.

10. Fahrzeug nach einem der Ansprüche 7 bis 9, **dadurch gekennzeichnet, dass** es mindestens eines der folgenden Merkmale enthält:
- mindestens ein mit beweglichen Klappen versehenes Gehäuse (20) ist im Inneren eines Leitkanals (11, 12, 101, 102) des Luftleiters (10, 100) auf der Seite von dessen Vorderseite untergebracht,
- eine Unterseite (14, 105) des Luftleiters (10, 100) verbindet die Frontseite (4) dicht mit der Frontendstruktur (1), oder eine Unterwand (6) verbindet die Frontseite (4) mit der Frontendstruktur (1) unter dem Luftleiter, wobei die Unterwand (6) dicht fest mit der Frontseite, der Frontendstruktur und dem Luftleiter verbunden ist,
- der Luftleiter (100) trägt seitliche Enden der Frontseite (4),
- ein Stoßdämpfer wird von einem stoßabsorbierenden Bereich (121) des Luftleiters (100) gebildet,
- seitliche Befestigungseinrichtungen verbinden direkt die Frontseite und die Frontendstruktur.

## Claims

1. Air guide (10, 100) intended to be incorporated in the front of a vehicle between a functional front end (1) linked to a cross-member (2) by components that can be compressed longitudinally (3) and a front end (4) of said vehicle provided with at least one ventilation opening (4a), the air guide (10, 100) exhibiting a front face (10a, 100a) and a rear face (10b, 100b), **characterized in that** the air guide (10, 100) is produced from a single piece in a polymer material and **in that** it comprises:
- at least one guiding channel (11, 12, 101-104) between its front and rear faces, intended to conduct the air from a ventilation opening (4a) in the front end (4) to the functional front end (1),
- a receiving zone (16, 116) of the cross-member (2) exhibiting a recess intended to receive said cross-member,
- a fixing zone (17, 117) for fixing to the functional front end (1) of the vehicle situated on its rear face (10b, 100b),
- sealing means (18, 118) integral with its front face (10a, 100a) and engaging with the front end (4), arranged in such a manner as to ensure the seal between said at least one guiding channel (11, 12, 101-104) and the front end (4) on the circumference of said ventilation opening (4a) in the front end.

2. Air guide (10, 100) according to Claim 1, **characterized in that** the recess in the receiving zone (16, 116) of the cross-member is located on the side of the front face (10a) of the air guide (10) or on the side of the rear face (100b) of the air guide (100).

3. Air guide (10, 100) according to either of Claims 1 and 2, **characterized in that** the sealing means (18, 118) are chosen from among:
- sealing lips (18a, 18b) in polymer material overmolded or fitted on an edge of the front face of the guide
- sealing gaskets (18c), for example in a polymer foam material, form-fitted to the front face of the guide.

4. Air guide (10, 100) according to one of Claims 1 to 3, **characterized in that** the fixing zone (17, 117) comprises a plurality of projections (17a, 117a) configured to be inserted into corresponding housings (1a) in the functional front end (1).

5. Air guide (10, 100) according to one of Claims 1 to 4, **characterized in that** it exhibits at least one of the following features:
- its front face (100a) has a shock-absorbing zone (121),
- a lower face (14) extends between its front and rear faces.

6. Air guide (10, 100) according to one of Claims 1 to 5, **characterized in that** the polymer material of the air guide is chosen from among expanded polymer materials, for example expanded polypropylene or expanded polystyrene.

7. Vehicle comprising:
- an engine compartment closed off by a front end (4) provided with at least one ventilation opening (4a),
- a functional front end (1) supporting at least one radiator (7) and
- a cross-member (2) attached to the functional front end (1) by longitudinally compressible components (3), said cross-member (2) being situated between the functional front end (1) and the front end (4), **characterized in that** it comprises an air guide (10, 100) according to one of the preceding claims, the rear face (10b, 100b) of which is form-fitted to the functional front end (1) and the front face (10a, 100a) of which is at least partially in contact with the front end (4), the cross-member (2) being housed in the receiving zone (16, 116) of said air guide (10, 100).

8. Vehicle according to Claim 7, **characterized in that** the sealing components (22) are arranged between the air guide (100) and non-planar surfaces of structural components of the vehicle in contact with the air guide, for example non-planar surfaces of the cross-member (2) and the longitudinally compressible components (3).

9. Vehicle according to Claim 7 or 8, **characterized in that** the air guide (10, 100) is form-fitted to the functional front end (1) by fitting projections (17a, 117a) on the rear face (10b, 100b) of the air guide (10, 100) in corresponding matching housings (1a) in the functional front end (1) and, optionally, by additional screw-type or post-type fixing means crossing the air guide and fixed to the functional front end.

10. Vehicle according to one of Claims 7 to 9, **characterized in that** it comprises at least the one of the following characteristics:
- at least one casing (20) provided with movable flaps is housed on the inside of a guiding channel (11, 12, 101, 102) of said air guide (10, 100), on the side of the front face of said air guide,
- a lower face (14, 105) of said air guide (10, 100) links the front end (4) to the functional front end (1) in a leak-proof manner or a lower wall (6) links the front end (4) to the functional front end (1) below said air guide, said lower wall (6) being form-fitted in a leak-proof manner to the front end, to the functional front end and to the air guide,
- the air guide (100) supports lateral ends of the front end (4),
- a shock absorber is formed by a shock-absorbing zone (121) of the air guide (100),
- lateral fixing means directly link the front end and the functional front end.
